Europäisches Patentamt

(19) European Patent Office

Office européen des brevets

(11) Publication number: **0 206 137**
**A2**

## (12) EUROPEAN PATENT APPLICATION

(21) Application number: **86108010.9**

(22) Date of filing: **12.06.86**

(51) Int. Cl.⁴: **F 23 K 1/00**

(30) Priority: **20.06.85 SE 8503093**

(43) Date of publication of application: **30.12.86**
**Bulletin 86/52**

(84) Designated Contracting States: **AT DE FR GB IT**

(71) Applicant: **ASEA STAL Aktiebolag, S-721 83 Västeras (SE)**

(72) Inventor: **Eidh, Bo, Klövervägen 13, S-597 00 Atvidaberg (SE)**
Inventor: **Ivarsson, Eva-Lena, Ulvasavägen 4C, S-582 47 Linköping (SE)**

(74) Representative: **Boecker, Joachim, Dr.-Ing., Rathenauplatz 2-8, D-6000 Frankfurt a.M. 1 (DE)**

(54) **Method for drying, crushing and distribution of solid fuel for a solid fuel boiler.**

(57) Method for drying, crushing and distribution of solid fuel for a solid fuel boiler, for example a fluidized bed boiler. According to the invention moist fuel (9) is crushed and dried by intermixing gas and/or ash (13, 14) in a unit (12). The fuel is set in motion, for example in a cyclone (15), together with gas (13), and is divided into several subflows (27-29) to be fed into the boiler at different points (4).

EP 0 206 137 A2

ASEA-STAL AB
S-721 83 Västeras / Sweden

Method for drying, crushing and distribution of solid fuel
for a solid fuel boiler

The invention relates to a method for drying, crushing and
distribution of solid fuel for a solid fuel boiler according
to the precharacterising part of claim 1.

A problem in connection with fuel for a solid fuel boiler is
that the fuel often contains large amounts of moisture and
often exists of coarse pieces or agglomerates. These problems are particularly inconvenient when the fuel is to be
divided into several sub-flows.

The invention aims at a method for drying, crushing and
distribution of solid fuel which imparts a consistency to
the fuel that makes it suitable to be divided into several
sub-flows.

To achieve this aim the invention suggests a method according to the introductory part of claim 1, which is characterized by the features of the characterizing part of claim 1.

Further developments of the invention are characterized by
the features of the additional claims.

According to the invention, the fuel enters a unit in which
it is crushed, dehumidified, and divided into sub-flows. To
this unit, gas and/or finely divided ash is/are added, which

-2-

evaporate(s) or, alternatively, bind(s) the surface moisture of the fuel by the use of ash. A crusher means may be arranged inside the unit or be connected to the unit to crush the fuel into a particle size suitable for the combustion process. In the unit the fuel is set in motion in such a way that the total flow can be divided into sub-flows, which can be performed in any of the following ways:

a) Part of the unit is constructed in the form of a cyclone, in which the sub-flows are taken out along the periphery of the cyclone, i.e. the fuel moves around in a circular path and leaves the cyclone through a number of holes. The exact number of holes is determined by the desired number of sub-flows. The gas needed for this movement can either be the hot drying gas mentioned above or - preferably in cases where drying is performed by means of ash - cold gas which is supplied in addition to the ash.

b) The distribution can be carried out by forcing the fuel to different feeding out points by means of a rotary arm, vane or the like arranged at the bottom of the unit.

c) The distribution can be carried out by forming part of the unit as a fluidized bed with outlet tubes in the form of a spillway. When the level of the fluidized bed is at the same level as the outlet tubes, the prepared fuel is distributed over the different tubes. The fluidizing air may either be the hot drying gas mentioned above, or cold gas as in the case of ash admixture.

The invention will now be described in greater detail with reference to the accompanying drawings showing - by way of example - in

Figure 1 a fluidized bed boiler plant in which the method according to the invention is employed,

Figure 2 an embodiment of the distribution unit 12 in Figure
   1,

Figure 3 schematically a distribution unit with a distributing arm,

Figure 4 a distribution unit with a fluidized bed.

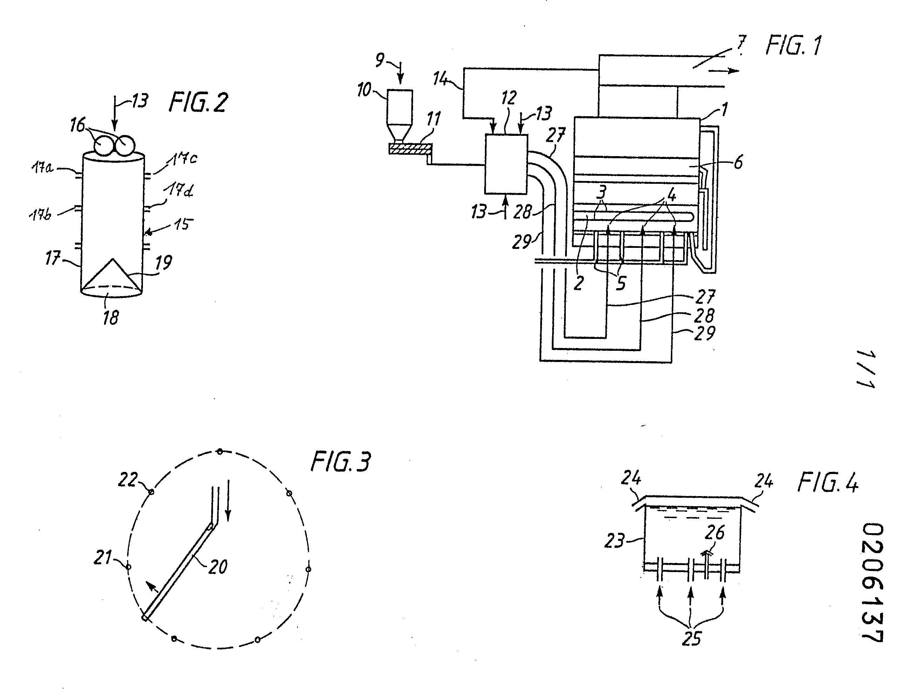

Figure 1 shows a fluidized bed boiler 1 in which, in a first
bed 2 (the lowermost bed), there is arranged a nest of
boiler tubes 3 for water and steam intended to be heated by
the combustion. Fuel enters via schematically shown inlets 4
into the bed, which is fluidized by means of air injected
through inlets 5. The boiler 1 comprises at least one additional bed 6, and has a gas outlet 7. The other parts associated with the boiler 1 are not shown, since they are without any significance for the invention. Fuel, such as coal,
is fed at 9 into a buffer silo 10, or the like, and is fed
by means of a conveyor screw means 11 into a unit 12 comprising a crusher and containing drying gas. This unit 12 is
exemplified in Figure 2. It is provided with several feeding
points. Hot gas 13 as well as fly ash 14 from the gas outlet
7 are supplied to the unit 12. From the unit 12 two, three
or more sub-flows 27, 28, 29 are fed out.

Figure 2 shows an embodiment of the distribution unit 12
comprising a cyclone 15 and a crushing mill 16 connected
thereto. The fuel enters from above into the cyclone 15,
whereas hot gas is blown in from the side, from above and or
from below. The fuel is distributed by means of the cyclone
15 along its periphery and can be distributed from different
outlets, such as 17a to 17d, positioned at different axial
heights and/or different radial positions along the
periphery of the side wall of the cyclone 15. The sub-flows
can also be taken out through outlets in the bottom, whereby
the bottom can be given ,for example, a flat shape 18 or a
conical shape 19. The distribution can also take place,

- 4 -

according to Figure 3, by means of a rotary arm 20 and a number of feeding out holes 21, 22, etc. Also in this case, injection of hot gas and feeding of ash can be performed. Instead of the arm 20, a vane or the like can be arranged at the bottom of the unit 12. The arm 20 can also be arranged at the bottom of the unit 12.

Figure 4 shows a fluidized bed for distribution of fuel, which bed is not to be confused with the fluidized beds in the boiler 1. The fluidized fuel bed 23 is provided with outlet tubes 24 in the form of a spillway. When the level in the fluidized fuel bed 23 is at the same level as the outlet tubes 24, the bed material is distributed among the different tubes 24. The fluidizing medium can either be the drying gas mentioned above, or cold gas in the case of ash feeding. The fluidizing medium is fed in at 25 and the fuel through inlet 26. The positioning of the feeding point of the inlet 26 below the bed surface in a fluidized bed gives a better and more uniform distribution of fuel.

The method according to the invention can be varied in many ways within the scope of the appended claims.

CLAIMS

1. Method for drying, crushing and distribution of solid fuel for a solid fuel boiler, for example a fluidized bed boiler, c h a r a c t e r i z e d  in that  moist fuel (9) is crushed and dried  by intermixing gas and/or ash (13, 14) in a unit (12), that the fuel is set in motion together with gas (13), and that the fuel is divided into several sub-flows (27-29) to be fed into the boiler at different points (4).

2. Method according to claim 1,  c h a r a c t e r i z e d in that the mixture of gas and crushed fuel is fed into a cyclone (15), from which a number of sub-flows are taken out.

3. Method according to claim 2,  c h a r a c t e r i z e d in that  the sub-flows are taken out at the periphery of the cyclone (15).

4. Method according to claim 1,  c h a r a c t e r i z e d in that the crushed fuel is rotated by means of a rotary arm (20) in a unit (12), in which dehumidification and crushing have previously taken place, for example adjacent to the outer end of the arm.

5. Method according to claim 1,  c h a r a c t e r i z e d in that the distribution is carried out in the spillway of a fluidized bed distributor (23).

6. Method according to claim 5,  c h a r a c t e r i z e d in that as fluidizing gas in the distributor there is used the hot drying gas or - preferably in the case of ash admixture - a cold gas.

FIG. 1

FIG. 2

FIG. 3

FIG. 4

0206137